# EUROPEAN PATENT APPLICATION

(11) **EP 4 618 669 A1**
(43) Date of publication of application: **17.09.2025**
(21) Application number: 22965062.7
(22) Date of filing: 07.11.2022
(51) Int. Cl.: H04W 72/0457, H04W 72/232

(54) **TERMINAL, BASE STATION, WIRELESS COMMUNICATION SYSTEM, AND WIRELESS COMMUNICATION METHOD**

(71) Applicant: NTT DOCOMO, INC., Tokyo 100-6150 (JP)
(72) Inventor: OKANO Mayuko, Tokyo 100-6150 (JP); HARADA Hiroki, Tokyo 100-6150 (JP); OKAMURA Masaya, Tokyo 100-6150 (JP)
(74) Representative: Hoffmann Eitle
(86) International application number: PCT/JP2022/041444
(87) International publication number: WO 2024/100735

(57) **Abstract**

A terminal includes: a receiving unit that receives single specific downlink control information for scheduling channels to be transmitted on two or more carriers; and a control unit that assumes, using a specification method, a reference carrier for determining a specification restriction on the specific downlink control information.

## Description

### [Technical Field]

The present disclosure relates to a terminal, a base station, a radio communication system, and a radio communication method that support a mechanism of scheduling PDSCHs or PUSCHs to be transmitted on two or more CCs, using a single DCI to be transmitted on a CC.

### [Background Art]

The 3rd Generation Partnership Project (3GPP) has prepared a specification for the 5th generation mobile communication system (also called 5G, New Radio (NR), or Next Generation (NG)) and is also preparing next generation specifications called Beyond 5G, 5G Evolution, or 6G.

In addition, in 3GPP Release 18, CA (Carrier Aggregation) for both intra-band and inter-band is considered. Specifically, introduction of a mechanism of scheduling PDSCHs (Physical Downlink Shared Channels) or PUSCHs (Physical Uplink Shared Channels) to be transmitted on two or more CCs, using a single DCI (Downlink Control Information) to be transmitted on a CC (Component Carrier) is considered. Such a mechanism may be called Single DCI Multi-carrier PDSCH/PUSCH scheduling or Single DCI Multi-Cell PDSCH/PUSCH scheduling (Non-Patent Literature 1).

### [Citation List]

### [Non-Patent Literature]

[Non Patent Literature 1]
"New WID on Multi-carrier enhancements", RP-213577, 3GPP TSG RAN Meeting #94e, 3GPP, December 2021

### [Summary of Invention]

Incidentally, various restrictions related to existing DCI are determined based on a cell to be scheduled using the existing DCI (hereinafter, reference cell). The various restrictions related to the existing DCI include the number of BDs (Blind Detections) that can be executed by a terminal (hereinafter, UE: User Equipment), the number of CCEs (Component Carrier Elements) that can be monitored by the UE, the number of DCI sizes that can be decoded by the UE, and SS (Search Space) configuration that can be monitored by the UE.

Under such a background, the inventors find, after diligent study, that since two or more cells are scheduled in Single DCI Multi-carrier PDSCH/PUSCH scheduling, the above-described reference cell cannot be appropriately assumed.

Accordingly, the present disclosure has been made to solve the above issue, and an object thereof is to provide a terminal, a base station, a radio communication system, and a radio communication method that enable to appropriately execute a restriction related to a DCI in Single DCI Multi-carrier PDSCH/PUSCH scheduling.

An aspect of the present disclosure is a terminal including: a receiving unit that receives single specific downlink control information for scheduling channels to be transmitted on two or more carriers; and a control unit that assumes, using a specification method, a reference carrier for determining a specification restriction on the specific downlink control information.

Another aspect of the present disclosure is a base station including: a transmitting unit that transmits single specific downlink control information for scheduling channels to be transmitted on two or more carriers; and a control unit that assumes, using a specification method, a reference carrier for determining a specification restriction on the specific downlink control information.

Another aspect of the present disclosure is a radio communication system including: a terminal; and a base station, wherein the terminal includes a receiving unit that receives single specific downlink control information for scheduling channels to be transmitted on two or more carriers; and a control unit that assumes, using a specification method, a reference carrier for determining a specification restriction on the specific downlink control information.

Another aspect of the present disclosure is a radio communication method including: a step (A) of receiving single specific downlink control information for scheduling channels to be transmitted on two or more carriers; and a step (B) of assuming, using a specification method, a reference carrier for determining a specification restriction on the specific downlink control information.

### [Brief Description of Drawings]

[FIG. 1] FIG. 1 is an overall schematic configuration diagram of a radio communication system 10.
[FIG. 2] FIG. 2 is a diagram illustrating frequency ranges used in the radio communication system 10f
[FIG. 3] FIG. 3 is a diagram illustrating a configuration example of a radio frame, a subframe, and a slot used in the radio communication system 10.
[FIG. 4] FIG. 4 is a functional block configuration diagram of a UE 200.
[FIG. 5] FIG. 5 is a functional block configuration diagram of a gNB 100.
[FIG. 6] FIG. 6 is a diagram for explaining Self carrier scheduling.
[FIG. 7] FIG. 7 is a diagram for explaining Cross carrier scheduling.
[FIG. 8] FIG. 8 is a diagram for explaining Multi carrier scheduling5
[FIG. 9] FIG. 9 is a diagram for explaining an issue.
[FIG. 10] FIG. 10 is a diagram for explaining an operation example.
[FIG. 11] FIG. 11 is a diagram for explaining an operation example.
[FIG. 12] FIG. 12 is a diagram illustrating a hardware configuration example of the gNB 100 and the UE 200.
[FIG. 13] FIG. 13 is a diagram illustrating a configuration example of a vehicle 2001.

### [Modes for Carrying out the Invention]

Hereinafter, an embodiment will be described based on the drawings. Note that, the same functions and configurations are denoted by the same or similar reference signs, and their description will be omitted as appropriate.

### [Embodiment]

### (1) Overall Schematic Configuration of Radio Communication System

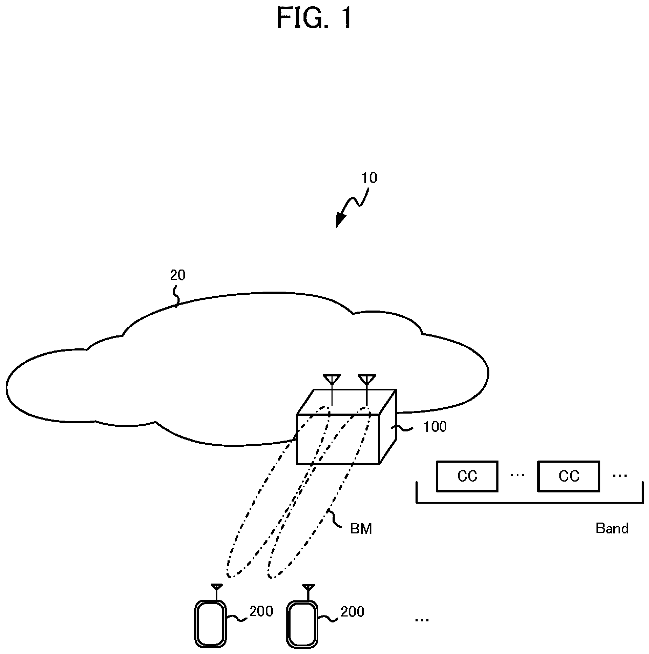

FIG. 1 is an overall schematic configuration diagram of a radio communication system 10 according to the embodiment. The radio communication system 10 is a radio communication system according to 5G New Radio (NR), and includes a Next Generation-Radio Access Network 20 (hereinafter, NG-RAN 20) and a terminal 200 (hereinafter, User Equipment (UE) 200).

Note that, the radio communication system 10 may be a radio communication system according to a scheme called Beyond 5G, 5G Evolution, or 6G.

The NG-RAN 20 includes a base station 100 (hereinafter, gNB 100). Note that, the specific configuration of the radio communication system 10 including the number of gNBs 100 and UEs 200 is not limited to that of the example illustrated in FIG. 1.

The NG-RAN 20 actually includes multiple NG-RAN Nodes, specifically, gNBs (or ng-eNBs), and is connected to a core network (5GC, not illustrated) according to 5G. Note that, the NG-RAN 20 and 5GC may be simply expressed as a "network".

The gNB 100 is a radio base station according to 5G, and performs radio communication with the UE 200 according to 5G. The gNB 100 and the UE 200 can be compatible with Massive MIMO (Multiple-Input Multiple-Output) that generates a beam BM with higher directivity by controlling radio signals transmitted from multiple antenna elements, carrier aggregation (CA) that uses multiple component carriers (CCs) in a bundle, dual connectivity (DC) that communicates with two or more transport blocks at the same time between the UE and each of two NG-RAN Nodes, and the like.

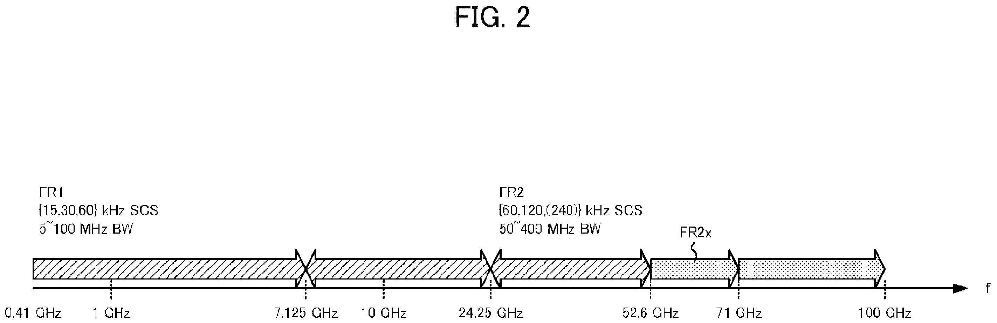

In addition, the radio communication system 10 is compatible with multiple frequency ranges (FRs). FIG. 2 is a diagram illustrating frequency ranges used in the radio communication system 10.

As illustrated in FIG. 2, the radio communication system 10 is compatible with an FR1, an FR2-1, and an FR2-2. Frequency bands of the respective FRs are as follows.

- FR1: 410 MHz to 7.125 GHz
- FR2-1: 24.25 GHz to 52.6 GHz
- FR2-2: 52.6 GHz to 71 GHz

In the FR1, a Sub-Carrier Spacing (SCS) of 15, 30, or 60 kHz may be used, and a bandwidth (BW) of 5 to 100 MHz may be used. The FR2-1 has a higher frequency than the FR1, the SCS of 60 or 120 kHz (240 kHz may be included) may be used, and the bandwidth (BW) of 50 to 400 MHz may be used. FR2-2 has a higher frequency than FR2-1, the SCS of 120, 480 kHz, or 960 kHz may be used, and the bandwidth (BW) of 400 to 2000 MHz may be used.

Note that, the SCS may be interpreted as numerology. The numerology is defined in 3GPP TS38.300 and corresponds to one sub-carrier spacing in a frequency domain.

Further, the radio communication system 10 is also compatible with a higher frequency band than the FR2-2 frequency band. Specifically, the radio communication system 10 is compatible with a frequency band greater than 52.6 GHz and up to 71 GHz or 114.25 GHz. Such a high frequency band may be called "FR2x" for convenience.

In order to solve the problem that the influence of phase noise becomes larger in the high frequency band, when using a band exceeding 52.6 GHz, Cyclic Prefix-Orthogonal Frequency Division Multiplexing (CP-OFDM)/ Discrete Fourier Transform-Spread (DFT-S-OFDM) having larger Sub-Carrier Spacing (SCS) may be applied.

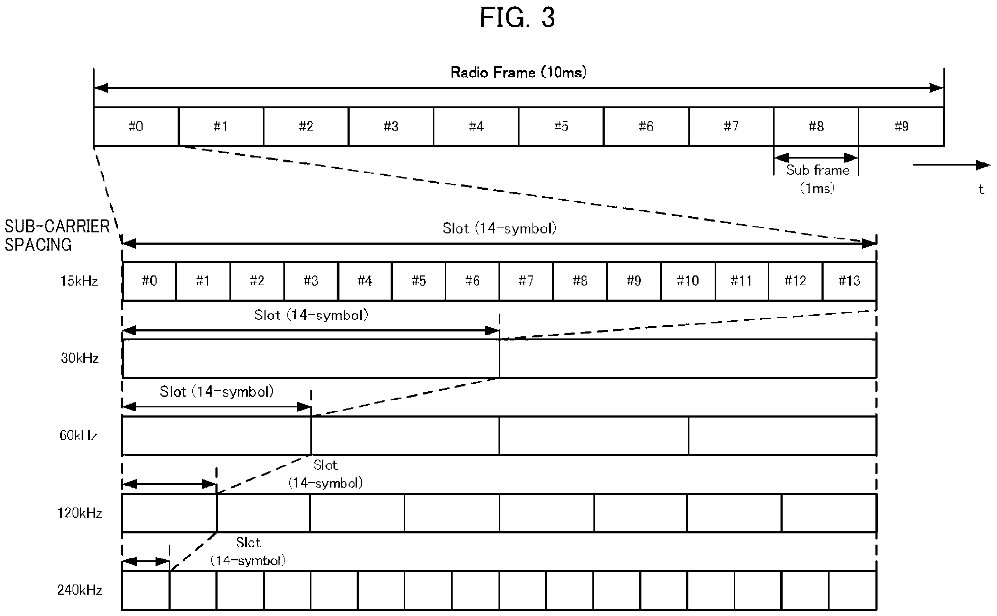

FIG. 3 is a diagram illustrating a configuration example of a radio frame, a subframe, and a slot used in the radio communication system 10.

As illustrated in FIG. 3, one slot includes 14 symbols, and a symbol period (and a slot period) becomes shorter as the SCS becomes larger (wider). The SCS is not limited to the interval (frequency) illustrated in FIG. 3. For example, 480 kHz, 960 kHz, or the like may be used.

In addition, the number of symbols constituting one slot is not necessarily 14 symbols (for example, 28 symbols or 56 symbols). Further, the number of slots per subframe may be different depending on the SCS.

Note that, a time direction (t) illustrated in FIG. 3 may be called a time domain, a symbol period, a symbol time, or the like. In addition, a frequency direction may be called a frequency domain, a resource block, a subcarrier, a Bandwidth Part (BWP), or the like.

A DMRS is a kind of reference signal, and is prepared for various channels. Here, unless otherwise specified, it may mean a downlink data channel, specifically, a DMRS for PDSCH (Physical Downlink Shared Channel). However, an uplink data channel, specifically, a DMRS for PUSCH (Physical Uplink Shared Channel) may be construed as being similar to a DMRS for PDSCH.

The DMRS may be used for channel estimation at the UE 200 as part of a device, e.g., coherent demodulation. The DMRS may exist only in resource blocks (RBs) used for PDSCH transmission.

The DMRS may have multiple mapping types. Specifically, the DMRS has a mapping type A and a mapping type B. In the mapping type A, the first DMRS is allocated in the second or third symbol of a slot. In the mapping type A, the DMRS may be mapped based on a boundary between slots regardless of where in a slot actual data transmission starts. The reason why the first DMRS is allocated in the second or third symbol of a slot may be construed as for the purpose of allocating the first DMRS after control resource sets (CORESET).

In the mapping type B, the first DMRS may be allocated in the first symbol of data assignment. In other words, the DMRS may be given relatively to a location where data is allocated, not to the boundary between slots.

Further, the DMRS may have multiple types (Types). Specifically, the DMRS has a Type 1 and a Type 2. The Type 1 and Type 2 are different in mapping and the maximum number of orthogonal reference signals in a frequency domain. The Type 1 can output up to four orthogonal signals in a single-symbol DMRS, and the Type 2 can output up to eight orthogonal signals in a double-symbol DMRS.

### (2) Functional Block Configuration of Radio Communication System

Next, a functional block configuration of the radio communication system 10 will be described.

First, a functional block configuration of the UE 200 will be described.

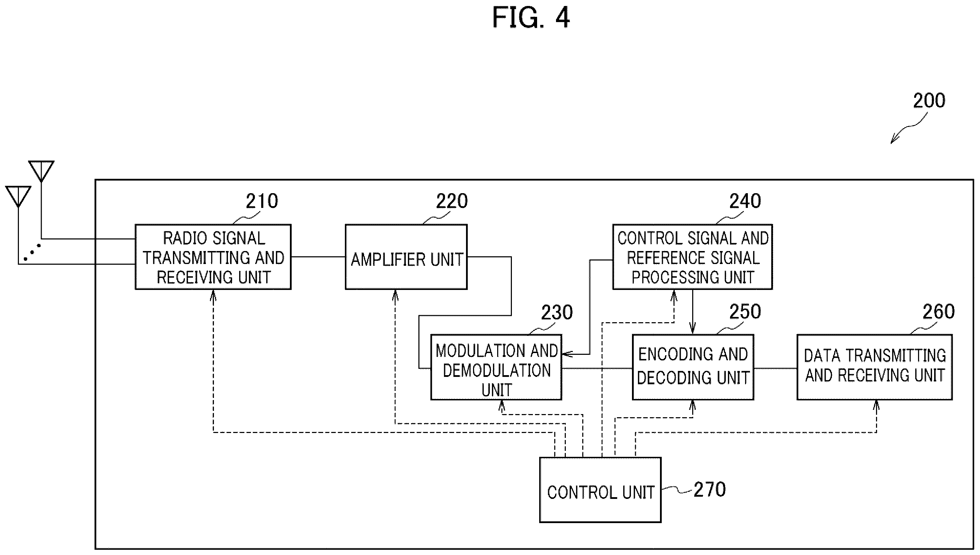

FIG. 4 is a functional block configuration diagram of the UE 200. As illustrated in FIG. 4, the UE 200 includes a radio signal transmitting and receiving unit 210, an amplifier unit 220, a modulation and demodulation unit 230, a control signal and reference signal processing unit 240, an encoding and decoding unit 250, a data transmitting and receiving unit 260, and a control unit 270.

The radio signal transmitting and receiving unit 210 transmits and receives a radio signal according to NR. The radio signal transmitting and receiving unit 210 deals with Massive MIMO, CA in which multiple CCs are bundled and used, DC in which communication is simultaneously performed between the UE and each of two NG-RAN Nodes, and the like.

The amplifier unit 220 includes a PA (Power Amplifier) / LNA (Low Noise Amplifier) and the like. The amplifier unit 220 amplifies a signal output from the modulation and demodulation unit 230 to a predefined power level. In addition, the amplifier unit 220 amplifies an RF signal output from the radio signal transmitting and receiving unit 210.

The modulation and demodulation unit 230 executes data modulation and demodulation, transmission power setting, resource block assignment, and the like for each predefined communication destination (gNB 100 or another gNB). In the modulation and demodulation unit 230, Cyclic Prefix-Orthogonal Frequency Division Multiplexing (CP-OFDM) / Discrete Fourier Transform-Spread (DFT-S-OFDM) may be applied. Further, DFT-S-OFDM may be used not only for uplink (UL) but also for downlink (DL).

The control signal and reference signal processing unit 240 executes processing related to various control signals transmitted and received by the UE 200, and processing related to various reference signals transmitted and received by the UE 200.

Specifically, the control signal and reference signal processing unit 240 receives various control signals transmitted from the gNB 100 via a predefined control channel, for example, a control signal of a radio resource control layer (RRC). Further, the control signal and reference signal processing unit 240 transmits various control signals to the gNB 100 via a predefined control channel.

The control signal and reference signal processing unit 240 executes processing using a reference signal (RS) such as a Demodulation Reference Signal (DMRS) and a Phase Tracking Reference Signal (PTRS).

The DMRS is a known terminal-specific reference signal (pilot signal) between the base station and the terminal for estimating a phasing channel used for data demodulation. The PTRS is a terminal-specific reference signal designed for the purpose of estimating phase noise that is a problem in a high frequency band.

Note that, the reference signal may include a Channel State Information-Reference Signal (CSI-RS), a Sounding Reference Signal (SRS), and a Positioning Reference Signal (PRS) for position information, in addition to the DMRS and the PTRS.

In addition, the channel includes a control channel and a data channel. The control channel includes a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI), a Physical Broadcast Channel (PBCH), and the like.

In addition, the data channel includes a PDSCH (Physical Downlink Shared Channel), a PUSCH (Physical Uplink Shared Channel), and the like. Data means data transmitted via the data channel. The data channel may be interchanged with a shared channel.

Here, the control signal and reference signal processing unit 240 may receive downlink control information (DCI). The DCI includes, as existing fields, fields for storing DCI Formats, Carrier indicator (CI), BWP indicator, FDRA (Frequency Domain Resource Assignment), TDRA (Time Domain Resource Assignment), MCS (Modulation and Coding Scheme), HPN (HARQ Process Number), NDI (New Data Indicator), RV (Redundancy Version), and the like.

A value stored in the DCI Format field is an information element specifying the format of the DCI. A value stored in the CI field is an information element specifying a CC for which the DCI is applied. A value stored in the BWP indicator field is an information element specifying a BWP for which the DCI is applied. The BWP that can be specified by the BWP indicator is configured by an information element (BandwidthPart-Config) included in an RRC message. A value stored in the FDRA field is an information element specifying a frequency domain resource for which the DCI is applied. The frequency domain resource is identified by a value stored in the FDRA field and an information element (RA Type) included in the RRC message. A value stored in the TDRA field is an information element specifying a time domain resource for which the DCI is applied. The time domain resource is identified by a value stored in the TDRA field and an information element (pdsch-TimeDomainAllocationList, pusch-TimeDomainAllocationList) included in the RRC message. The time domain resource may be identified by a value stored in the TDRA field and a default table. A value stored in the MCS field is an information element specifying an MCS for which the DCI is applied. The MCS is identified by a value stored in the MCS and an MCS table. The MCS table may be specified by the RRC message, or may be identified by RNTI scrambling. A value stored in the HPN field is an information element specifying a HARQ Process for which the DCI is applied. A value stored in the NDI is an information element for identifying whether data for which the DCI is applied is first transmission data. A value stored in the RV field is an information element specifying redundancy of data for which the DCI is applied.

In the embodiment, the control signal and reference signal processing unit 240 receives downlink control information (hereinafter, DCI).

The DCI may include a DCI that has been used prior to Release 17 (hereinafter, existing DCI). The existing DCI may be called a first DCI. A format of the existing DCI may include one or more selected from DCI formats 0_0/ 0_1/ 0_2/ 1_0/ 1_1/ 1_2/ 2_0/ 2_1/ 2_2/ 2_3/ 2_4/ 2_5/ 2_4/ 2_5/ 2_6/ 2_7/ 3_0/ 3_1/ 4_0/ 4_1/ 4_2. These DCI formats may be specified in TS38.212 V17.2.0 §7.3 "Downlink control information". The DCI having DCI format 0_0/ 1_0 may be called a fallback DCI. The DCI having DCI format 0_2/ 1_2 may be called a compact DCI. The DCI having DCI format 0_1/ 1_1 may be called a non-fallback DCI.

In addition, the DCI may include single specific downlink control information (hereinafter, specific DCI) for scheduling channels to be transmitted on two or more carriers. The specific DCI may be called a second DCI in contrast to the existing DCI. The channels scheduled using the single specific DCI may be PDSCHs or PUSCHs.

Here, the mechanism of scheduling PDSCHs or PUSCHs to be transmitted on two or more CCs, using the single specific DCI to be transmitted on a CC, is a newly introduced mechanism. Such a mechanism may be called Single DCI Multi-carrier PDSCH/PUSCH scheduling, Single DCI Multi-Cell PDSCH/PUSCH scheduling, or the like. The format of the specific DCI may be called DCI formats 0_X, 1_X, or DCI formats 0_3, 1_3.

As described above, in the embodiment, the control signal and reference signal processing unit 240 includes a receiving unit that receives single specific downlink control information (specific DCI) for scheduling channels to be transmitted on two or more carriers. Here, a carrier may be read as a CC or a cell.

The encoding and decoding unit 250 performs data division and coupling, channel coding and decoding, and the like for each predefined communication destination (gNB 100 or another gNB) .

Specifically, the encoding and decoding unit 250 divides data output from the data transmitting and receiving unit 260 into predefined sizes, and performs channel coding on the divided data. Further, the encoding and decoding unit 250 decodes data output from the modulation and demodulation unit 230 and couples the decoded data.

The data transmitting and receiving unit 260 transmits and receives a Protocol Data Unit (PDU) and a Service Data Unit (SDU). Specifically, the data transmitting and receiving unit 260 performs assembly and disassembly of the PDU and SDU in multiple layers (a media access control layer (MAC), a radio link control layer (RLC), a packet data convergence protocol layer (PDCP), and the like). In addition, the data transmitting and receiving unit 260 executes error correction and retransmission control of data on the basis of HARQ (Hybrid Automatic Repeat Request).

The control unit 270 controls each of functional blocks configuring the UE 200. In the embodiment, the control unit 270 includes a control unit that assumes, using a specification method, a reference carrier for determining a specification restriction on specific downlink control information (specific DCI). Details of the specification restriction and the specification method will be described below.

Second, a functional block configuration of the gNB 100 will be described.

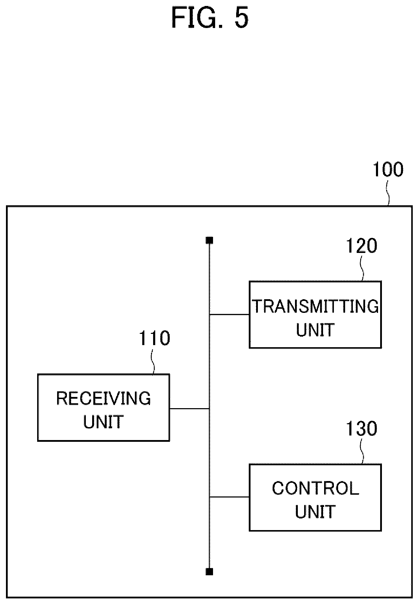

FIG. 5 is a functional block configuration diagram of the gNB 100. As illustrated in FIG. 5, the gNB 100 has a receiving unit 110, a transmitting unit 120, and a control unit 130.

The receiving unit 110 receives various signals from the UE 200. The receiving unit 110 may receive a UL signal via a PUCCH or a PUSCH.

The transmitting unit 120 transmits various signals to the UE 200. The transmitting unit 120 may transmit a DL signal via a PDCCH or a PDSCH. In the embodiment, the transmitting unit 120 includes a transmitting unit that transmits single specific downlink control information (specific DCI) for scheduling channels to be transmitted on two or more carriers.

The control unit 130 controls the gNB 100. In the embodiment, the control unit 130 includes a control unit that assumes, using a specification method, a reference carrier for determining a specification restriction on specific downlink control information (specific DCI).

### (3) Issue

First, the types of scheduling will be described.

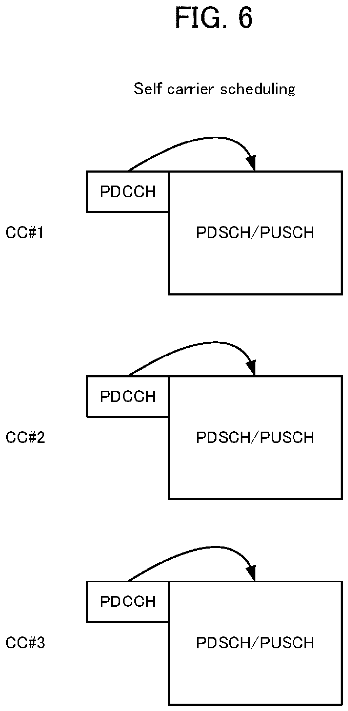

As illustrated in Fig. 6, a method of scheduling a PDSCH/PUSCH of a CC using a PDCCH (DCI) of the CC (hereinafter, Self carrier scheduling) is assumed. For example, a PDSCH/PUSCH of CC#1 is scheduled using a DCI of CC#1, a PDSCH/PUSCH of CC#2 is scheduled using a DCI of CC#2, and a PDSCH/PUSCH of CC#3 is scheduled using a DCI of CC#3.

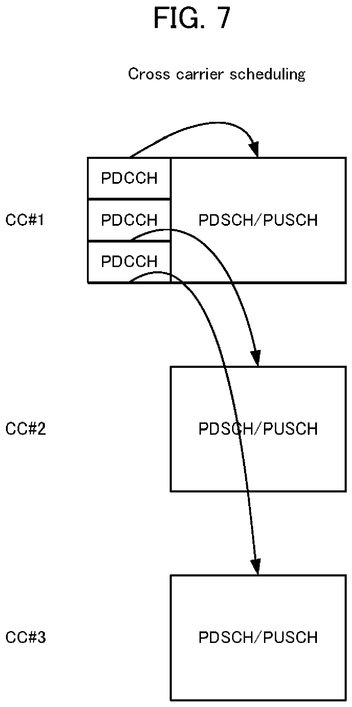

As illustrated in FIG. 7, a method of scheduling PDSCHs/PUSCHs of different CCs using a PDCCH (DCI) of a CC (hereinafter, Cross carrier scheduling) is assumed. For example, a PDSCH/PUSCH of CC#1 is scheduled using a DCI of CC#1, a PDSCH/PUSCH of CC#2 is scheduled using another DCI of CC#1, and a PDSCH/PUSCH of CC#3 is scheduled using another DCI of CC#1. In Cross carrier scheduling, a DCI scheduling the PDSCH/PUSCH of each CC is transmitted separately.

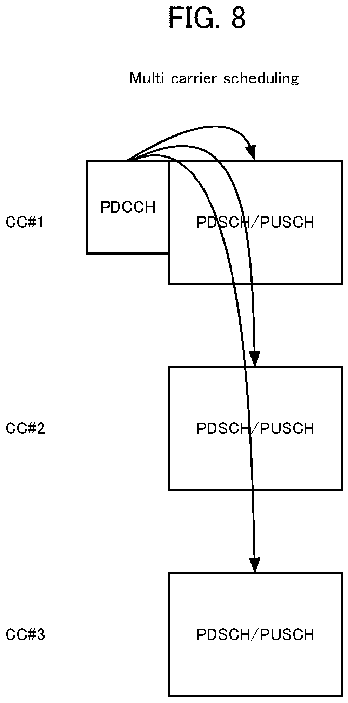

As illustrated in FIG. 8, a method of scheduling PDSCHs/PUSCHs of two or more CCs using a single PDCCH (DCI) of a CC (hereinafter, Multi carrier scheduling) is assumed. For example, a single DCI of CC#1 is used to schedule PDSCHs/PUSCHs of CC#1, CC#2, and CC#3. Multi carrier scheduling is synonymous with Single DCI Multi-carrier PDSCH/PUSCH scheduling. As described above, Multi carrier scheduling is a mechanism that is newly introduced.

Here, the DCIs used in Self carrier scheduling and Cross carrier scheduling are the existing DCI (for example, DCI formats 0_0/ 0_1/ 0_2/ 1_0/ 1_1/ 1_2, etc). In contrast, the DCI used in Multi carrier scheduling is a specific DCI (for example, DCI formats 0_X/1_X).

Second, restrictions on the existing DCI will be explained. The following can be considered as the restrictions on the existing DCI.

(1) The restrictions on the existing DCI may include one on the maximum number of BDs (Blind Detections) of the DCI that can be executed by the UE 200. The number of BDs of the DCI may be read as the number of candidate PDCCHs monitored by the UE 200. The restriction on the maximum number of BDs may be one specified in 3GPP TS38.213 V17.3.0 section 10.1 "UE procedure for determining physical downlink control channel assignment".
(2) The restrictions on the existing DCI may include one on the maximum number of CCEs (Component Carrier Elements) that can be monitored by the UE 200. The restriction on the maximum number of CCEs may be one specified in 3GPP TS38.213 V17.3.0 section 10.1 "UE procedure for determining physical downlink control channel assignment".
(3) The restrictions on the existing DCI may include one on the maximum number of DCI sizes which can be decoded by the UE 200. DCI sizes may be adjusted as necessary. The restriction on the maximum number of DCI sizes may be one specified in 3GPP TS38.212 V17.3.0 section 7.3.1.0 "DCI size alignment".
(4) The restrictions on the existing DCI may include one on SS (Search Space) configuration that can be monitored by the UE 200. The SS configuration may be read as the maximum number of candidate PDCCHs (nrofCandidates) per AL (Aggregation Level). The restriction on the SS configuration may be one specified in 3GPP TS38.213 V17.3.0 section 10.1 "UE procedure for determining physical downlink control channel assignment".

Here, since one CC is scheduled in the existing DCI, the restrictions on the existing DCI are determined based on one cell or CC (reference cell or reference CC) to be scheduled using the existing DCI.

However, the inventors find, after diligent study, that since two or more cells are scheduled in the Single DCI Multi-carrier PDSCH/PUSCH scheduling, the reference cell cannot be appropriately assumed using the same method as in the existing DCI.

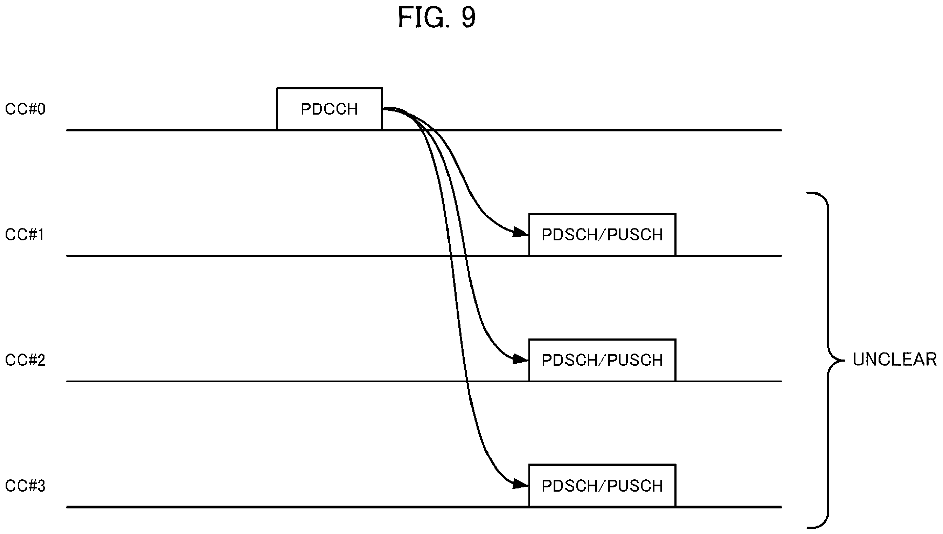

Specifically, as illustrated in FIG. 9, a case is considered where a specific DCI to be transmitted in CC#0 is used to schedule PDSCHs/PUSCHs for CC#1, CC#2, and CC#3. In such a case, when a reference CC is specified using the same method as in the existing DCI, it is unclear which of CC, CC#1, CC#2, and CC#3 should be used as the reference CC.

### (4) Operation examples

In order to solve the above issue, the following operation examples may be specified. Hereinafter, a method (specification method) of assuming a reference carrier (hereinafter, reference CC) for determining specification restrictions on the specific DCI will be described. The reference CC is a CC that is a target for which the number of BDs, the number of CCEs, the number of DCI sizes, and the SS configuration are counted.

The specification restrictions regarding restrictions on the specific DCI may be similar to the restrictions on the existing DCI. That is, the specification restrictions may include the restriction on the maximum number of BDs, the restriction on the maximum number of CCEs, the restriction on the maximum number of DCI sizes, and the restriction on the SS configuration. The contents (maximum numbers) of the specification restrictions may be common to the contents (maximum numbers) of the restrictions on the existing DCI, or may be defined separately from the contents (maximum numbers) of the restrictions on the existing DCI.

Here, when a function of executing PUSCH/PDSCH scheduling for two or more cells using the specific DCI (Multi carrier scheduling) is configured, a set of cells that can be scheduled using the specific DCI is configured. The set of cells may be configured in a table format. The set of cells may be configured using RRC signaling.

For example, in the example illustrated in FIG. 9, the set of cells may include CC#0, CC#1, CC#2, and CC#3. Also, cells actually scheduled using the specific DCI may be a part of the set of cells.

### (4.1) Operation example 1

In operation example 1, a method of specifying a reference CC for determining the restriction on the maximum number of BDs and the restriction on the maximum number of CCEs will be described. The following options can be considered as the specification method.

In option 1-1, the reference CC may be a cell to which an SS set of the specific DCI is configured. For example, in the example illustrated in FIG. 9, CC#0, in which the specific DCI (PDCCH) is transmitted, may be assumed as the reference CC. Here, a condition that the SS set of the specific DCI is configured is an example of a specification condition for specifying the reference CC.

In option 1-2, the reference CC may be a cell having the smallest Cell index (or CC index) among cells scheduled using the specific DCI. For example, in the example illustrated in FIG. 9, CC#1 may be assumed as the reference CC when CC#1 has the smallest Cell index. Here, a condition that a cell has the smallest Cell index is an example of the specification condition for specifying the reference CC.

Note that the reference CC may be a cell having the largest Cell index among cells scheduled using the specific DCI. For example, in the example illustrated in FIG. 9, CC#3 may be assumed as the reference CC when CC#3 has the largest Cell index.

As a derivation of option 1-2, the reference CC may be a cell having the smallest Cell index among cells included in the set of cells. The reference CC may be a cell having the largest Cell index among cells included in the set of cells. In such a case, the reference CC may be a cell that is not scheduled using the specific DCI.

In option 1-3, the reference CC may be a reference cell that is specified for a purpose other than the restrictions on the specific DCI. The reference cell may be one referenced in HARQ-ACK feedback timing. The reference cell may be one used in last DCI format determination at the time of generating a HARQ-ACK codebook. The reference cell may be one referenced by a DAI (downlink assignment index). Here, a condition that a reference cell is specified for a purpose other than the restrictions on the specific DCI is an example of the specification condition for specifying the reference CC.

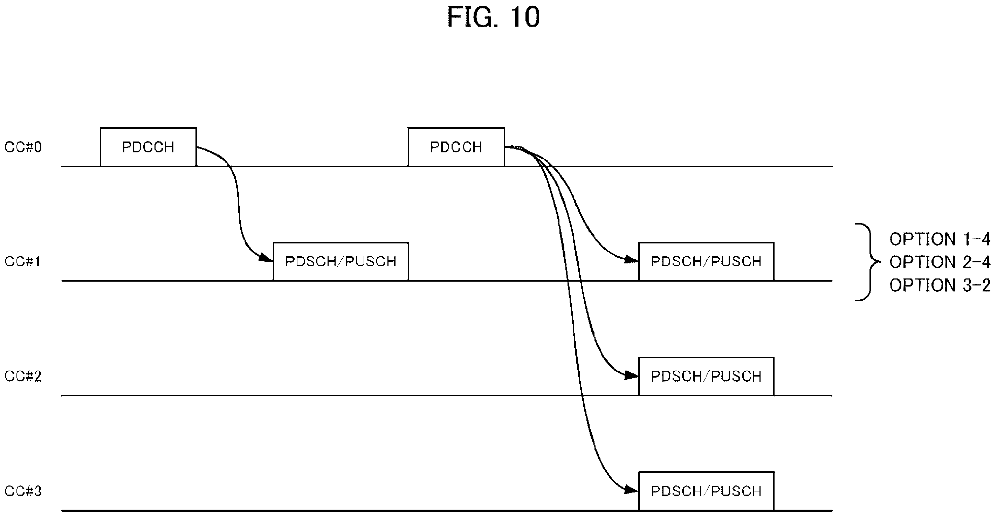

In option 1-4, when there is a cell scheduled using the existing DCI among the set of cells that can be scheduled using the specific DCI, the reference CC may be any cell selected from one or more cells scheduled using the existing DCI. For example, as illustrated in FIG. 10, when a PDSCH/PUSCH of CC#1 is scheduled using the existing DCI, CC#1 may be assumed as the reference CC.

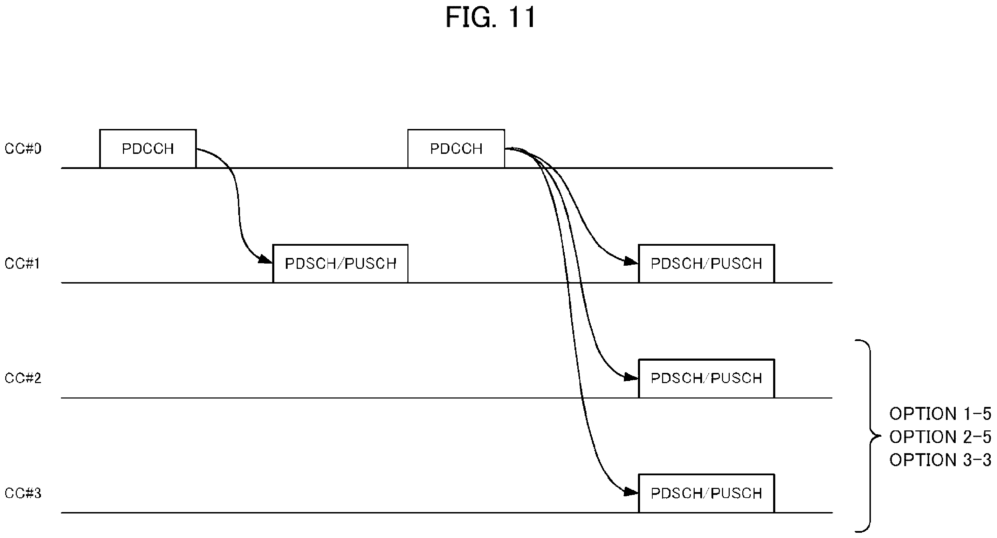

In option 1-5, when there is a cell scheduled using the existing DCI among the set of cells that can be scheduled using the specific DCI, the reference CC may be any cell selected from one or more cells other than the cell scheduled using the existing DCI. For example, as illustrated in FIG. 11, when a PDSCH/PUSCH of CC#1 is scheduled using the existing DCI, any cell selected from CC#2 and cell #3 may be assumed as the reference CC.

In option 1-6, the reference CC may be configured using a higher layer parameter. The higher layer parameter may be a parameter newly introduced to configure the reference CC. The higher layer parameter may be a parameter implicitly indicating the reference CC using an existing higher layer parameter or a combination of existing higher layer parameters.

Although there are no particular limitations, in option 1-6, the reference CC configured using the higher layer parameter need only be a cell included in the set of cells, and need not be a cell scheduled using the specific DCI (scheduled cell). Alternatively, the higher layer parameter may include a priority in which a cell is selected as the reference CC, and a cell having the highest priority among cells scheduled using the specific DCI (scheduled cells) may be selected as the reference CC.

In option 1-7, the reference CC may be one used in the restriction on the maximum number of DCI sizes (see operation example 2).

In option 1-8, two or more options 1-x selected from the options 1-1 to 1-7 described above may be combined. For example, options 1-2 and 1-4 may be combined, and options 1-2 and 1-5 may be combined.

In option 1-9, specification methods (options 1-1 to 1-8 described above) may differ depending on whether a cell to which the specific DCI is transmitted (scheduling cell) is included in cells scheduled using the specific DCI (scheduled cells) .

In option 1-10, the UE 200 may report UE capability regarding which of the specification methods (options 1-1 to 1-9 described above) is supported.

In operation example 1, options 1-1 to 1-3 are examples of the specification method in which a cell satisfying the specification condition from among two or more carriers (set of cells), is assumed as the reference CC. Options 1-4 and 1-5 are examples of the specification method in which the reference CC is assumed based on whether or not there is a CC scheduled using the existing DCI. Option 1-6 is an example of the specification method in which it is assumed that the reference CC is configured using the higher layer parameter.

According to operation example 1, since the specification methods of specifying the reference CC are specified, it is possible to appropriately execute the specification restrictions on the maximum number of BDs and the maximum number of CCEs.

### (4.2) Operation example 2

In operation example 2, a method of specifying a reference CC for determining the restriction on the maximum number of DCI sizes will be described. The following options can be considered as the specification method.

In option 2-1, the reference CC may be a cell to which an SS set of the specific DCI is configured. For example, in the example illustrated in FIG. 9, CC#0, in which the specific DCI (PDCCH) is transmitted, may be assumed as the reference CC. Here, a condition that the SS set of the specific DCI is configured is an example of a specification condition for specifying the reference CC.

In option 2-2, the reference CC may be a cell having the smallest Cell index (or CC index) among cells scheduled using the specific DCI. For example, in the example illustrated in FIG. 9, CC#1 may be assumed as the reference CC when CC#1 has the smallest Cell index. Here, a condition that a cell has the smallest Cell index is an example of the specification condition for specifying the reference CC.

Note that the reference CC may be a cell having the largest Cell index among cells scheduled using the specific DCI. For example, in the example illustrated in FIG. 9, CC#3 may be assumed as the reference CC when CC#3 has the largest Cell index.

As a derivation of option 2-2, the reference CC may be a cell having the smallest Cell index among cells included in the set of cells. The reference CC may be a cell having the largest Cell index among cells included in the set of cells. In such a case, the reference CC may be a cell that is not scheduled using the specific DCI.

In option 2-3, the reference CC may be a reference cell that is specified for a purpose other than the restrictions on the specific DCI. The reference cell may be one referenced in HARQ-ACK feedback timing. The reference cell may be one used in last DCI format determination at the time of generating a HARQ-ACK codebook. The reference cell may be one referenced by a DAI. Here, a condition that a reference cell is specified for a purpose other than the restrictions on the specific DCI is an example of the specification condition for specifying the reference CC.

In option 2-4, when there is a cell scheduled using the existing DCI among the set of cells that can be scheduled using the specific DCI, the reference CC may be any cell selected from one or more cells scheduled using the existing DCI. For example, as illustrated in FIG. 10, when a PDSCH/PUSCH of CC#1 is scheduled using the existing DCI, CC#1 may be assumed as the reference CC.

In option 2-5, when there is a cell scheduled using the existing DCI among the set of cells that can be scheduled using the specific DCI, the reference CC may be any cell selected from one or more cells other than the cell scheduled using the existing DCI. For example, as illustrated in FIG. 11, when a PDSCH/PUSCH of CC#1 is scheduled using the existing DCI, any cell selected from CC#2 and cell #3 may be assumed as the reference CC.

In option 2-6, the reference CC may be configured using a higher layer parameter. The higher layer parameter may be a parameter newly introduced to configure the reference CC. The higher layer parameter may be a parameter implicitly indicating the reference CC using an existing higher layer parameter, or a combination of existing higher layer parameters.

Although there are no particular limitations, in option 2-6, the reference CC configured using the higher layer parameter need only be a cell included in the set of cells, and need not be a cell scheduled using the specific DCI (scheduled cell). Alternatively, the higher layer parameter may include a priority in which a cell is selected as the reference CC, and a cell having the highest priority among cells scheduled using the specific DCI (scheduled cell) may be selected as the reference CC.

In option 2-7, the reference CC may be one used in the restriction on the maximum number of BDs and the restriction on the maximum number of CCEs (see operation example 1).

In option 2-8, two or more options 2-x selected from the options 2-1 to 2-7 described above may be combined. For example, options 2-2 and 2-4 may be combined, and options 2-2 and 2-5 may be combined.

In option 2-9, specification methods (options 2-1 to 2-8 described above) may differ depending on whether a cell to which the specific DCI is transmitted (scheduling cell) is included in cells scheduled using the specific DCI (scheduled cell) .

In option 2-10, the UE 200 may report UE capability regarding which of specification methods (options 2-1 to 2-9 described above) is supported.

In operation example 2, options 2-1 to 2-3 are examples of the specification method in which a cell satisfying the specification condition from among two or more carriers (set of cells), is assumed as the reference CC. Options 2-4 and 2-5 are examples of the specification method in which the reference CC is assumed based on whether or not there is a CC scheduled using the existing DCI. Option 2-6 is an example of the specification method in which it is assumed that the reference CC is configured using the higher layer parameter.

According to operation example 2, since the specification methods of specifying the reference CC are specified, it is possible to appropriately execute the specification restrictions on the maximum number of DCI sizes.

### (4.3) Operation example 3

In Operation example 3, a method of specifying a reference CC for determining the restriction on the SS configuration will be described. The following options can be considered as the specification method.

In option 3-1, the reference CC may be a cell having the smallest Cell index (or CC index) among cells scheduled using the specific DCI. For example, in the example illustrated in FIG. 9, CC#1 may be assumed as the reference CC when CC#1 has the smallest Cell index. Here, a condition that a cell has the smallest Cell index is an example of the specification condition for specifying the reference CC.

Note that the reference CC may be a cell having the largest Cell index among cells scheduled using the specific DCI. For example, in the example illustrated in FIG. 9, CC#3 may be assumed as the reference CC when CC#3 has the largest Cell index.

As a derivation of option 3-1, the reference CC may be a cell having the smallest Cell index among cells included in the set of cells. The reference CC may be a cell having the largest Cell index among cells included in the set of cells. In such a case, the reference CC may be a cell that is not scheduled using the specific DCI.

In option 3-2, when there is a cell scheduled using the existing DCI among the set of cells which can be scheduled using the specific DCI, the reference CC may be any cell selected from one or more cells scheduled using the existing DCI. For example, as illustrated in FIG. 10, when a PDSCH/PUSCH of CC#1 is scheduled using the existing DCI, CC#1 may be assumed as the reference CC.

In option 3-3, when there is a cell scheduled using the existing DCI among the set of cells that can be scheduled using the specific DCI, the reference CC may be any cell selected from one or more cells other than the cell scheduled using the existing DCI. For example, as illustrated in FIG. 11, when a PDSCH/PUSCH of CC#1 is scheduled using the existing DCI, any cell selected from CC#2 and cell #3 may be assumed as the reference CC.

In operation example 3, option 3-1 is an example of the specification method in which a cell satisfying the specification condition from among two or more carriers (set of cells), is assumed as the reference CC. Options 3-2 and 3-3 are examples of the specification method in which the reference CC is assumed based on whether or not there is a CC scheduled using the existing DCI.

According to operation example 3, since the specification methods of specifying the reference CC are specified, it is possible to appropriately execute the specification restrictions on the SS configuration.

### (5) Actions and effects

In the embodiment, the UE 200 assumes a reference CC for determining a specification restriction on the specific DCI, using a specification method. With this configuration, by specifying the specification method for determining the reference CC, it is possible to appropriately execute the specification restriction on the specific DCI even when two or more CCs are scheduled using the specific DCI.

### (6) Other embodiments

Although the contents of the present invention have been described in accordance with the above embodiment, the present invention is not limited to these descriptions, and it is obvious to those skilled in the art that various modifications and improvements thereof are possible.

In the disclosure described above, the reference CC used for the restriction on the maximum number of BDs or the restriction on the maximum number of CCEs may be the same as the reference CC used for the restriction on the maximum number of DCI sizes, or may be different from the reference CC used for the restriction on the maximum number of DCI sizes. The reference CC used for the restriction on the maximum number of BDs or the restriction on the maximum number of CCEs may be the same as the reference CC used for the restriction on the SS configuration, or may be different from the reference CC used for the restriction on the SS configuration. The reference CC used for the restriction on the maximum number of DCI sizes may be the same as the reference CC used for the restriction on the SS configuration, or may be different from the reference CC used for the restriction on the SS configuration.

In the above disclosure, a UE Capability may be reported to a scheduling cell and may be reported to a scheduled cell. When a UE Capability is reported to a scheduled cell, the UE Capability may be notified from the scheduled cell to a scheduling cell.

In the above disclosure, configure, activate, update, indicate, enable, specify, and select may be read interchangeably. Similarly, link, associate, correspond, and map may be read interchangeably, and allocate, assign, monitor, and map may also be read interchangeably.

Furthermore, specific, dedicated, UE-specific, and UE-individual may be read interchangeably. Similarly, common, shared, group-common, UE-common, and UE-shared may be read interchangeably.

Note that the block diagrams (FIG. 4 and FIG. 5) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)", a "transmitter", and the like. The method for implementing each component is not particularly limited as described above.

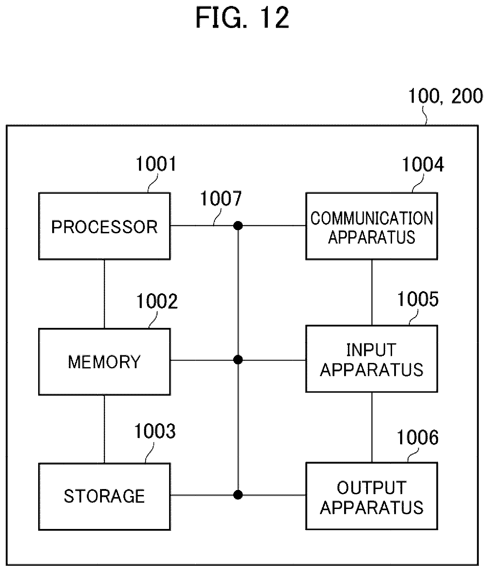

The eNB 100 and the UE 200 (apparatuses) which are described above may function as a computer that executes the processes of the radio communication method of the present disclosure. FIG. 12 is a diagram to illustrating an example of a hardware structure of the apparatuses. As illustrated in FIG. 12, the apparatuses may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a unit, and so on can be interchangeably interpreted. The hardware structure of the apparatuses may be configured to include one or more of apparatuses shown in the drawings, or may be configured not to include part of apparatuses.

Each functional block of the apparatuses (see FIG. 4) is implemented by any of hardware elements of the computer apparatus or a combination of the hardware elements.

Each function of the apparatuses is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of an optical disk such as a Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and other appropriate storage media. The storage 1003 may be referred to as "auxiliary storage apparatus". The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device", a "network controller", a "network card", a "communication module", and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the apparatuses may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB), and so on)), and other signals or combinations of these. Also, RRC signaling may be referred to as an "RRC message", and can be, for example, an RRC Connection Setup message, an RRC Connection Reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (for example, x is an integer or decimal), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these, or combinations of these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with the base station, it is clear that various operations that are performed to communicate with the terminal can be performed by the base station, one or more network nodes (for example, MME, S-GW, and so on may be possible, but these are not limiting) other than the base station, or combinations of these. According to the above, a case is described in which there is a single network node other than the base station. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and a term required for understanding of the present specification may be replaced by a term having the same or similar meaning. For example, at least one of a channel or a symbol may be a signal (signaling). Further, a signal may be a message. Further, the Component Carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "Base Station (BS)", a "radio base station", a "fixed station", a "NodeB", an "eNB (eNodeB)", a "gNB (gNodeB)", an "access point", a "transmission point", a "reception point", a "transmission/reception point", a "cell", a "sector", a "cell group", a "carrier", a "component carrier", and so on can be used interchangeably. The base station may be referred to as the terms such as a "macro cell", a "small cell", a "femto cell", a "pico cell", and so on.

The base station can accommodate one or a plurality of (for example, three) cells (also called sectors). When the base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of the base station and a base station subsystem that provides communication services within this coverage.

In the present disclosure, "the base station transmits information to the terminal" may be read as "the base station instructs the terminal to perform a control or an operation based on information".

In the present disclosure, the terms "Mobile Station (MS)", "user terminal", "User Equipment (UE)", and "terminal" may be used interchangeably.

A mobile station may be referred to as a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", a "client", or some other appropriate terms in some cases.

At least one of the base station and the mobile station may be referred to as a "transmitting apparatus", a "receiving apparatus", a "radio communication apparatus", and so on. Note that at least one of the base station and the mobile station may be a device mounted on a moving object, a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of the base station and the mobile station also includes an apparatus which does not necessarily move during communication operation. For example, at least one of the base station and the mobile station may be an Internet of Things (IoT) device such as a sensor.

Furthermore, the base station in the present disclosure may be interpreted as a user station (user terminal, the same applies hereinafter). For example, each aspect/embodiment of the present disclosure may be applied to the structure that replaces a communication between the base station and the user station with a communication between a plurality of user stations (for example, which may be referred to as "Device-to-Device (D2D)", "Vehicle-to-Everything (V2X)", and the like). In this case, the user stations may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user station in the present disclosure may be interpreted as the base station. In this case, the base station may have the functions of the user station.

A radio frame may be constituted of one or a plurality of frames in the time domain. Each of one or a plurality of frames in the time domain may be referred to as a "subframe".

Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a SubCarrier Spacing (SCS), a bandwidth, a symbol length, a cyclic prefix length, a Transmission Time Interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, the base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot", or the like. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "Sub-Carrier Group (SCG)", a "Resource Element Group (REG)", a "PRB pair", an "RB pair" and so on.

Furthermore, a resource block may be constituted of one or a plurality of Resource Elements (REs). For example, one RE may correspond to a radio resource field of one subcarrier and one symbol.

A Bandwidth Part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or coupling between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS", and may be referred to as a "pilot", depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up, search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining. Furthermore, "determining" may be regarded as "assuming", "expecting", "considering", and the like.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

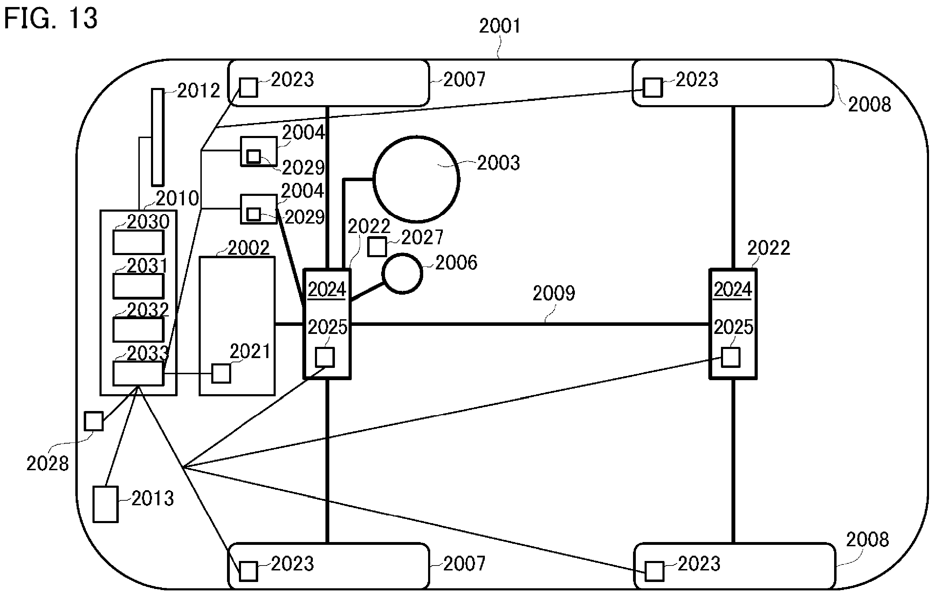

FIG. 13 illustrates an example of a configuration of a vehicle 2001. As illustrated in FIG. 13, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021 to 2027 provided in the vehicle 2001. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, and an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2028 provided in the vehicle 1.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits the current signal from the current sensor, which is input to the electronic control unit 2010, to external devices through radio communication. In addition, the communication module 2013 transmits to external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2028, etc., mounted in the vehicle 2001.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### (Supplementary Note)

The disclosure described above may be expressed as follows.

According to a first feature, there is provided a terminal including: a receiving unit that receives single specific downlink control information for scheduling channels to be transmitted on two or more carriers; and a control unit that assumes, using a specification method, a reference carrier for determining a specification restriction on the specific downlink control information.

According to a second feature, there is provided the terminal in the first feature, in which the specification method includes one or more methods selected from among a method in which a cell satisfying a specification condition from among the two or more carriers, is assumed as the reference carrier, a method in which the reference carrier is assumed based on whether there is a carrier scheduled using single downlink information, and a method in which it is assumed that the reference carrier is configured using a higher layer parameter.

According to a third feature, there is provided the terminal in the first feature or the second feature, in which the control unit performs reporting of a capability regarding the specification method supported by the terminal.

According to a fourth feature, there is provided a base station including: a transmitting unit that transmits single specific downlink control information for scheduling channels to be transmitted on two or more carriers; and a control unit that assumes, using a specification method, a reference carrier for determining a specification restriction on the specific downlink control information.

According to a fifth feature, there is provided a radio communication system including a terminal and a base station, in which the terminal includes: a receiving unit that receives single specific downlink control information for scheduling channels to be transmitted on two or more carriers; and a control unit that assumes, using a specification method, a reference carrier for determining a specification restriction on the specific downlink control information.

According to a sixth feature, a radio communication method including: a step (A) of receiving single specific downlink control information for scheduling channels to be transmitted on two or more carriers; and a step (B) of assuming, using a specification method, a reference carrier for determining a specification restriction on the specific downlink control information.

### [Explanation of Reference Numerals]

- 10: radio communication system
- 20: NG-RAN
- 100: gNB
- 110: receiving unit
- 120: transmitting unit
- 130: control unit
- 200: UE
- 210: radio signal transmitting and receiving unit
- 220: amplifier unit
- 230: modulation and demodulation unit
- 240: control signal and reference signal processing unit
- 250: encoding and decoding unit
- 260: data transmitting and receiving unit
- 270: control unit
- 1001: processor
- 1002: memory
- 1003: storage
- 1004: communication apparatus
- 1005: input apparatus
- 1006: output apparatus
- 1007: bus
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port

## Claims

1. A terminal comprising:
a receiving unit that receives single specific downlink control information for scheduling channels to be transmitted on two or more carriers; and
a control unit that assumes, using a specification method, a reference carrier for determining a specification restriction on the specific downlink control information.

2. The terminal according to claim 1, wherein the specification method includes one or more methods selected from among a method in which a cell satisfying a specification condition from among the two or more carriers, is assumed as the reference carrier, a method in which the reference carrier is assumed based on whether there is a carrier scheduled using single downlink information, and a method in which it is assumed that the reference carrier is configured using a higher layer parameter.

3. The terminal according to claim 1, wherein the control unit performs reporting of a capability regarding the specification method supported by the terminal.

4. A base station comprising:
a transmitting unit that transmits single specific downlink control information for scheduling channels to be transmitted on two or more carriers; and
a control unit that assumes, using a specification method, a reference carrier for determining a specification restriction on the specific downlink control information.

5. A radio communication system comprising
a terminal and a base station, wherein
the terminal includes:
a receiving unit that receives single specific downlink control information for scheduling channels to be transmitted on two or more carriers; and
a control unit that assumes, using a specification method, a reference carrier for determining a specification restriction on the specific downlink control information.

6. A radio communication method comprising:
a step (A) of receiving single specific downlink control information for scheduling channels to be transmitted on two or more carriers; and
a step (B) of assuming, using a specification method, a reference carrier for determining a specification restriction on the specific downlink control information.
